# EUROPEAN PATENT SPECIFICATION

(11) **EP 3 435 808 B1**
(45) Date of publication and mention of the grant of the patent: **30.08.2023**
(21) Application number: 17732611.3
(22) Date of filing: 31.03.2017
(51) Int. Cl.: A44B 19/26, A44B 19/42, B29C 45/00, B22D 17/16, A44B 19/30, A44B 19/32

(54) **METAL ONE PIECE SLIDE AND PULL FOR SLIDE FASTENER**
EINTEILIGER, METALLSCHIEBER UND ZUG FÜR REISSVERSCHLÜSSE
GLISSIÈRE MONOBLOC EN MÉTAL ET TIRETTE POUR FERMETURE À GLISSIÈRE

(30) Priority: 01.04.2016 IN 201621011697; 20.12.2016 US 201615385000; 20.12.2016 US 201615385294
(43) Date of publication of application: 06.02.2019
(73) Proprietor: Shah Technologies LLC, Palm Beach Gardens, FL 33410 (US)
(72) Inventor: SHAH, Nirav, Ashok, Vile Parle West Mumbai 400 049 (IN)
(74) Representative: HGF
(86) International application number: PCT/US2017/025385
(87) International publication number: WO 2017/173276

(56) References cited:
- EP-A2- 0 282 987
- DE-A1- 1 904 024
- FR-A1- 2 951 915
- JP-A- H02 243 103
- US-A- 2 509 278
- US-A- 5 698 243

## Description

### FIELD OF INVENTION

The present disclosure generally relates to slide fasteners, commonly referred to as zippers, and more particularly to a one piece slider and pull made from metal for the slide fastener.

### BACKGROUND INFORMATION

A zipper, zip, fly or zip fastener, formerly known as a clasp locker, or slide fastener is a commonly used device for binding the edges of an opening of fabric or other flexible material, like on a garment or a bag. It is used in clothing (e.g., jackets and jeans), luggage and other bags, sporting goods, camping gear, and other items.

The bulk of a zipper/zip consists of two rows of protruding teeth, which may be made to interdigitate, linking the rows, carrying from tens to hundreds of specially shaped metal or plastic teeth. These teeth can be either individual or shaped from a continuous coil, and are also referred to as *elements.* The slider operated by hand, moves along the rows of teeth. Inside the slider is a Y-shaped channel that meshes together or separates the opposing rows of teeth, depending on the direction of the slider's movement.

In general, a zipper represents a small amount of the overall cost of a product. However, if it fails, the entire garment or device may be unusable until the zipper is replaced or repaired. Problems often lie with the slider portion of the zipper. Sliders are typically made of a slide portion and a pull. The user grabs the pull, which is pivotally connected to the slide, and pushes or pulls the slide in one direction or the other to cause the slide to move. Movement of the slide causes the teeth to engage or disengage with each other as the movement occurs. Slides are typically manufactured to include one or more pieces to which the pull is later assembled. Assembly of the pull to the slide is usually accomplished by bending a bridge portion of the slide which is die cast having a gap to create an interlocking engagement between the two components. Other methods require assembly of extra bridge components which may be bent, staked or otherwise secured to the slide. However, these constructions are weak and prone to breakage with repeated use, causing the pull to become separated from the slide.

It has been proposed in the past to form the slide and the pull in a single operation. However, the proposed methods, devices and resulting zipper products have been unable to be produced or are unacceptable to the industry when produced from metal. Producing a metal slider assembly with the pull interlocked with the bridge has proven to be extremely difficult due to the rigid properties of the metal, which makes tool retraction from around the formed part very difficult without modifying the geometry of the part in an undesirable manner. Document EP 0 282 987 A2 discloses a method of manufacturing a slide member and a pull member in a single operation in a die casting tool according to the preamble of claim 1.

For example, U.S. Patent No. 2,736,062 to Scheuermann et al. discloses a method of molding a slide and pull together in a single operation. Scheuermann utilizes four slides that intersect at 45 degree angles with respect to each other. The slides intersect at the bridge and pull portions of the slider assembly with the pull positioned at a vertical right angle with respect to the top surface of the slide. However, this method, as shown in the drawings, requires the inner surfaces of the pull loop and the bridge to include 45 degree or similar angles that form sharp points along the inner surfaces. The sharp points cause stress risers in the part, and the sharp corners wear very quickly causing any surface coatings to be worn away. This results in discoloration of the slide assembly and often results in corrosion of the parts during a washing cycle. In addition, the modified geometry severely limits the movement of the pull within the bridge by reducing the space that the pull has to rotate and slide within the bridge.

U.S. Patents 5,604,962 to Mayerhofer, 5,698,243 to Wakabayashi, 4,210,196 to Weiner, and U.K. Patent No 2,220,608 to Liso all show variations of the Scheuermann device, which all require the angles inside of the bridge and the pull to retract the tools. Even though the angles are not depicted in all of the patents, the tooling cannot be retracted through hardened metal, and thus must be there for the tooling to function.

U.S. Patent No. 2,509,278 to Scheuermann discloses a mold that rotates the pull about its vertical axis to try and eliminate the angles on the inner surface of the pull loop. However, the angles are still required on the inner surface of the bridge, and the difficulty in producing the tools with the precision required for the pull rotation about the vertical axis has proven too costly.

U.S. Patent No. 4,790,973 to Minami et al. discloses a different method and device for molding slider assemblies. Minami molds the slide first and, once the slide has solidified, a core is partially retracted to form the pull in a secondary molding operation while the slide is still positioned in the mold.

U.S. Patent No. 5,013,511 to Akashi discloses yet another method and device for forming a zipper slide from metal. Akashi, like Minami, forms the slide portion in a first operation and forms the pull in a secondary operation. However, the pull of Akashi includes a pin which engages the bridge of the slide instead of the loop as disclosed in other prior art.

U.S. Patent No. 4,985,969 to Terada et al. discloses yet another method and device for forming a zipper slide assembly. Terada forms the pull in combination with an intermediate pull portion with the two portions interlocked with a pin member that is formed within a mold as a secondary operation.

U.K. Patent Application No. 2,289,917 to YKK Corp. discloses a locking slider assembly. The YKK locking slider discloses forming the pull in a separate mold and placing the pull in a secondary mold where the slide is formed around a pin portion of the pull to complete the assembly.

Thus, a need in the art exists for a device and method of forming a slide in combination with a pull, wherein the slide and pull can be formed from metal without the need for modified geometry of the slide assembly, including internal angled surfaces in the bridge and the loop portion of the pull.

The combined slide and pull assembly should satisfy the ergonomic needs that a zipper slide assembly must satisfy in order to achieve acceptance by the end user. This includes providing a slide bridge that includes an internal surface geometry that allows free movement and rotation of the pull. Further, the zipper slide assembly should not require excessive strength to operate or include oversized component parts. Moreover, the zipper slide assembly must assemble together in such a way so as not to detract from the aesthetic appearance of the completed zipper assembly or garment assembly.

Thus, the present disclosure provides a non-claimed die cast zipper slide assembly formed in a single operation which overcomes the disadvantages of prior art zipper slide assemblies formed in one or multiple operations. The zipper slide assembly not only provides for relative ease in manufacturing, it also permits slides and pulls to be manufactured together without the need to put motion limiting and failure prone angles on the inner surfaces of the bridge and pull loop. The present invention provides a manufacturing method which utilizes at least one side shifting slide, thereby eliminating the need for slides that interlock at angles and require the part geometry to be modified to accommodate the slide angles.

### SUMMARY OF THE INVENTION

The invention is defined in the appended claims. Briefly, the invention involves a method for manufacturing a zipper slide assembly according to claim 1. The method allows the bridge and pull loop to be formed with their full geometric shape and without the converging flat surfaces required in the prior art.

Accordingly, it is an objective to provide a non-claimed slider assembly for a zipper that includes a slider and a pull and is formed from metal in one operation.

It is a further objective to provide a non-claimed slider assembly including a slide and a pull that is die cast to include its full geometry without the need for converging inner surfaces as required by the prior art.

It is yet a further objective to provide a non-claimed slider assembly for a zipper that includes a closed puller loop and a closed bridge on the slider.

It is another objective of the present invention to provide a method of manufacturing a slider assembly for a zipper that includes at least one side shifting slide member for shifting the tool around a portion of the formed slide assembly.

It is yet another objective of the present invention to provide a method of manufacturing a slider assembly for a zipper that includes two or more side shifting slides for shifting the slide portions of the tool around solidified part geometry.

Other objectives and advantages will become apparent from the following description taken in conjunction with the accompanying drawings wherein are set forth, by way of illustration and example, certain embodiments. The drawings constitute a part of this specification and include exemplary embodiments and illustrate various objects and features thereof.

### BRIEF DESCRIPTION OF THE FIGURES

Figure 1 is a top perspective view of a non-claimed slide assembly for a zipper manufactured according to the method the present invention, illustrating the preferred position for die casting of the slider assembly;
Figure 2 is a partial top perspective view of the slide assembly shown in Fig. 1 illustrating a slider pull that has a round cross section in the area of the bridge;
Figure 3 is a partial top view of the a slide assembly shown in Fig. 1 illustrating the closing of the die casting tool having at least one side shifting slide;
Figure 4 is a perspective view of a non-claimed slide assembly for a zipper illustrating an additional link formed between the slide and the pull of the slider assembly;
Figure 5 is a side view illustrating a non-claimed slide assembly having two bridges and two pulls on a single slide;
Figure 6 is an end view illustrating a non-claimed slide assembly for a zipper having two bridges and two pulls on a single slide;
Figure 7 is an end view illustrating a non-claimed slide assembly for a zipper having two bridges, two pulls, and two intermediate links on a single slide;
Figure 8 is a side view illustrating a non-claimed slide assembly for a zipper having two bridges, two pulls, and two intermediate links on a single slide; and
Figure 9 is an isometric view illustrating a non-claimed slide assembly useful for double zippers.

### DETAILED DESCRIPTION OF THE PREFERRED EMBODIMENTS

While the present invention is susceptible of embodiment in various forms, there is shown in the drawings and will hereinafter be described a presently preferred embodiment with the understanding that the present disclosure is to be considered an exemplification of the invention.

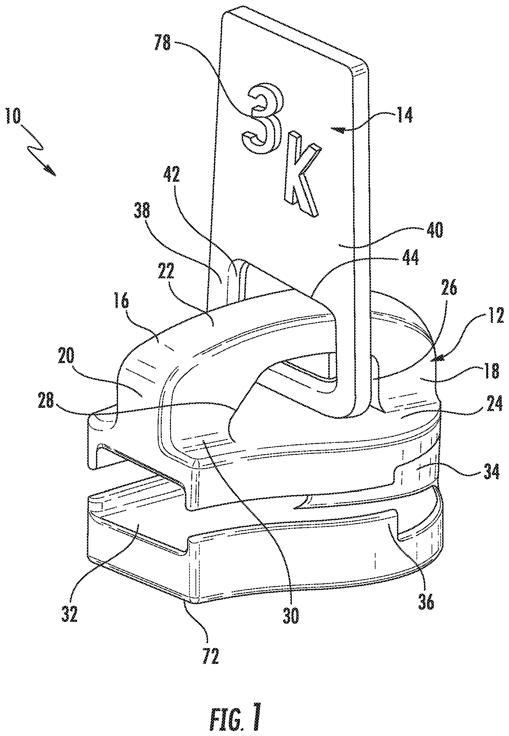

Referring generally to Figs. 1-3, a slide assembly (10) for zippers is illustrated. In its simplest form, the slide assembly (10) includes a slide member (12) and a pull member (14). The slide assembly (10) is preferably formed during a single operation in a die cast machine (not shown). The slide member (12) is formed to include a bridge (16) for locating and retaining the pull member (14) in a manner that allows for rotation and some linear translation of the pull member (14). The bridge (16) is also formed so that it does not include breaks or gaps which could weaken the bridge (16) and allow the pull member (14) to be released. Particularly, the bridge (16) includes a first end (18) and a second end (20) and central portion (22). Both the first and second ends (18) (20) are integrally formed to the top surface (24) of the slide (12). An inner surface (26) of the bridge is formed to be substantially flat as it extends transversely from side to side of the slide, but may include any desirable longitudinal contour for function or aesthetics. Because the bridge is integrally formed, corner radii (28) and fillets (30) may be formed during the die casting process to add strength and rigidity to the structure as well as aesthetic appearance. The inner portion (32) of the slide (12) includes a splitter (34) which divides the inner portion (32) into a Y-shape for causing the zipper chain (not shown) to be joined or separated as is known in the art. In a preferred embodiment, the slide (12) includes an upper guide (72) and a lower guide (74) for guiding the zipper chain through the slide (12), the upper guide (72) and the lower guide (74) being separated and secured together with a splitter (34), the splitter and said guides (72) (74) are constructed and arranged to interlock the zipper chain when moved in a first direction and disengage the zipper chain when moved in a second direction. At least one, and in some embodiments two, guide wall(s) (36) are integrally formed as part of the slider to help guide the teeth as they pass through the slider assembly (12).

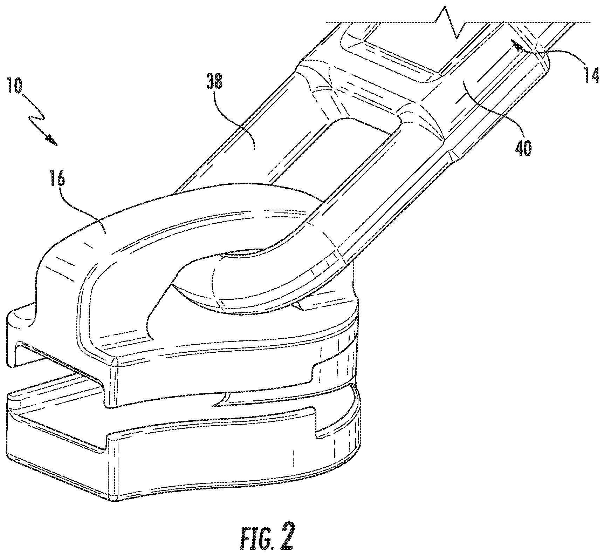

The pull (14) is formed in position around the bridge (16) to include a loop portion (38). The loop portion is integrally formed to the first tab portion (40) to eliminate breakage and separation of the two components during use. The loop portion (38) may include any geometry desirable, which may include rounds, ovals, polygons and the like, so long as the geometry is complete and does not require converging flat surfaces that are required to remove the tools from the formed part during manufacturing as seen in the prior art. In the embodiment illustrated in Fig. 1, the loop portion (38) is formed to be square in cross section, having a substantially flat inner loop surface (42) with inner corners (44) providing the desired appearance and function to the overall slide assembly (10). Fig. 2 illustrates a slide assembly (10) having a loop portion (38) with a round cross section formed around the same or similar bridge construction as described in Fig. 1. In this embodiment, the loop geometry is formed complete and does not require relief geometry for the tooling retraction after forming.

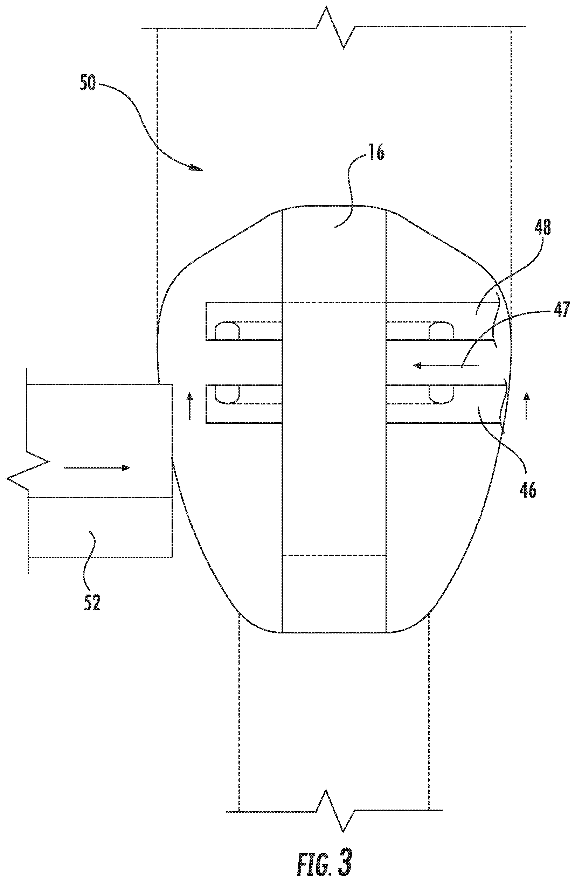

Figure 3 illustrates one embodiment for forming the pull (14) in place around the bridge (16). As illustrated, the tool includes at least one side shifting slide (46). As the die casting tool (50) is closed to form a slide (12) and pull (14), the at least one side shifting slide (46) and at least one first insert (48) and one secondary insert (52) are inserted into the area under the bridge (16). The insert (48) and side shifting insert (46) are positioned first along an insertion path so that the side shift can occur after the slide has reached its insertion depth. Next, the secondary insert (52) is timed to be positioned in the mold adjacent to the side shift insert (46) once the side shift has occurred. The remaining portions of the mold can be closed before, after or simultaneously with the slides. Other portions of the mold include mold sections that form the remainder of the loop (38) and pull (14). In a most preferred embodiment, the pull (14) is positioned to stand vertically with respect to the slide as illustrated in Fig. 1. However, it should be noted that by utilizing the side shifting slide(s), the pull may be rotated to different angles as needed in the mold. After formation of the slider assembly (10) in the die cast mold, the at least one side shifting slide is configured to make an orthogonal side shift after formation of the slide member assembly, the side shift having a length great enough to clear the geometry of the loop portion (38) before retraction of the slide from under the bridge (16).

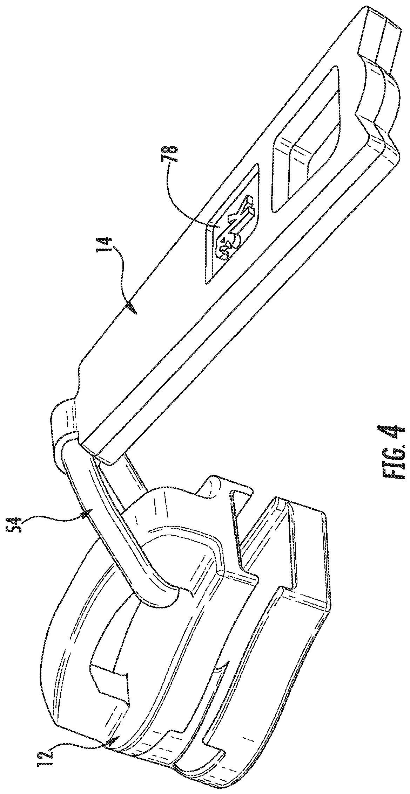

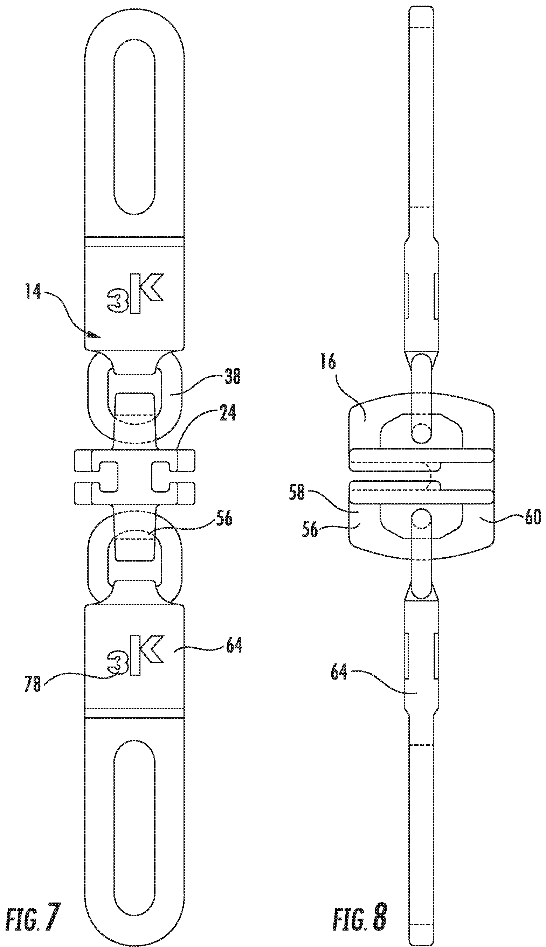

Referring to Figs. 4-8, a slide assembly (10) further including a connecting link (54) positioned and formed between the pull member (14) and the slide member (12) is illustrated. The connecting link (54) is formed as a continuous member, extending around the bridge (16) and the loop (38) connecting the bridge (16) to the pull member (14). The connecting link (54) is formed using the side shifting slides in the same manner as the loop portion (38) of the pull (14).

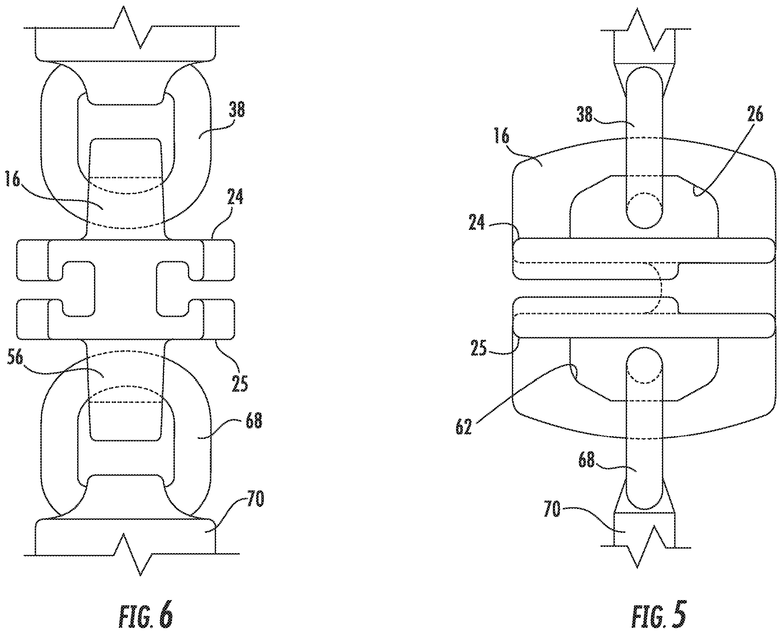

Referring to Figs. 5-8, a slide assembly (10) having a pull member (14) molded on each respective side of the slider assembly is illustrated. In this embodiment, the slide member (12) includes a bottom surface (25), the bottom surface includes a second bridge (56), the second bridge (56) having a first end (58) and a second end (60) both integrally formed to the bottom surface (25). An inner surface (26) of the bridge is formed to be substantially flat as it extends transversely across the inner surface (62). The second pull member (64) includes a second loop portion (68) and a second tab portion (70). The second loop portion (68) is formed as a continuous loop around the second bridge (56) and integrally formed to the second tab portion (70). In this embodiment, the slide member (12) and said pull members (14) (64) are formed in a single operation in a die casting tool (50); the die casting tool having at least one side shifting slide (46) for forming a portion of each of the inner surface (26) (62) of the first and second bridges (16) (56) and a lower portion of each loop portion (38) (68) of the pull members (14) (64), each at least one side shifting slide (46) being configured to shift orthogonally with respect to its insertion path.

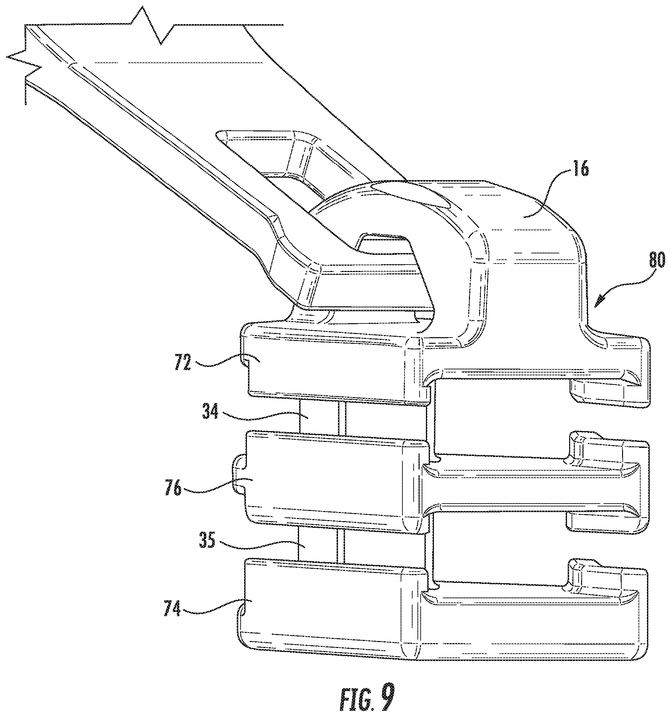

Referring to Fig. 9, a double chain slider assembly (80) is illustrated. In this embodiment, the slide (12) includes an upper guide (72), a middle guide (76) and a lower guide (74) for guiding a first zipper chain (not shown) and a second zipper chain (not shown) through the slide (12). The upper guide (72) and the middle guide (76) are separated and secured together with a first splitter (34), while the middle guide (76) and the lower guide (74) are separated and secured together with a second splitter (35). The splitters (34) (35) and the guides (72) (76) (74) are constructed and arranged to interlock a first zipper chain and a second zipper chain (not shown) when moved in a first direction, and disengage the first zipper chain and the second zipper chain when moved in a second direction. This embodiment may be used for zipper chains that are the same or different from the first to the second zipper chain. This embodiment applies to waterproof zipper chains and the like, wherein one zipper chain provides fastening while the second zipper chain provides water proofing.

Referring to Figs. 1-9, it should be noted that the pulls or slides may include indicia (78), in the form of logos, figures, characters or the like that are integrally formed as part of the slider assembly. This also includes, but should not be limited to, serial numbers, lot numbers, part numbers, patent numbers, trademarks and the like. It should also be noted that the present embodiments are specifically utilized for forming slider assemblies from metal in a die casting process, and thus various metals may be utilized, including, but not limited to, zinc, aluminum, magnesium, titanium, copper, brass and suitable combinations thereof.

All patents and publications mentioned in this specification are indicative of the levels of those skilled in the art to which the invention pertains.

One skilled in the art will readily appreciate that the present invention is well adapted to carry out the objects and obtain the ends and advantages mentioned, as well as those inherent therein. Any compounds, methods, procedures and techniques described herein are presently representative of the preferred embodiments, are intended to be exemplary, and are not intended as limitations on the scope as defined by the claims.

## Claims

1. A method of manufacturing a slide assembly for a zipper, the method comprising:
forming a slide member (12), said slide member being constructed and arranged to open and close a zipper chain, said slide member (12) including a top surface (24), said top surface including a bridge (16) having a first end (18) and a second end (20) both integrally formed to said top surface (24), an inner surface (26) of said bridge formed to be substantially flat as it extends transversely across said inner surface (26) and forming a pull member (14) having a loop portion (38) and a first tab portion (40), said loop portion formed as a continuous loop around said bridge (16) and integrally formed to said first tab portion (40); said slide member (12) and said pull member (14) both formed in a single operation in a die casting tool (50), said die casting tool having at least one side shifting slide (46) for forming a portion of the inner surface (26) of the bridge (16) and a lower portion of the loop portion (38) of the pull member (14), **characterized by** said at least one side shifting slide (46) being configured to shift orthogonally with respect to its insertion path, wherein said die casting tool (50) further includes at least one first insert (48) and one secondary insert (52), wherein as said die casting tool is closed to form the slide (12) and pull (14), the at least one side shifting slide (46) and the at least one first insert (48) and one secondary insert (52) are inserted into the area under the bridge (16), the insert (48) and the side shifting insert (46) are positioned first along an insertion path so that the side shifting can occur after the slide has reached its insertion depth, next the secondary insert (52) is timed to be positioned in the die casting tool adjacent to the side shift insert (46) once the side shift has occurred.

2. The method of claim 1 wherein said die casting tool (50) includes two side shifting slides (46) for forming a portion of the inner surface (26) of the bridge (16) and a lower portion of the loop portion (38) of the pull member (14), said two side shifting slides (46) being configured to shift orthogonally with respect to their insertion paths to a position adjacent with respect to each other.

3. The method of claim 1 wherein said at least one side shifting slide (46) is shifted once an insertion depth of said at least one side shifting slide (46) has been established to close the tool for forming a portion of said loop portion (38).

4. The method of claim 1 wherein said loop portion (38) of said pull member (14) is substantially round.

5. The method of claim 1 wherein said loop portion (38) of said pull member (14) is substantially square.

6. The method of claim 1 wherein said loop portion (38) of said pull member (14) is polygon shaped.

7. The method of claim 1 wherein said slide member (12) includes a bottom surface (25), said bottom surface including a second bridge (56), said second bridge (56) having a first end (58) and a second end (60) both integrally formed to said bottom surface (25), an inner surface (62) of said bridge formed to be substantially flat as it extends transversely across said inner surface (62);
a second pull member (64) having a second loop portion (68) and a second tab portion (70), said second loop portion (68) formed as a continuous loop around said second bridge (56) and integrally formed to said second tab portion (70);
said slide member (12) and said pull members (14) (64) formed in a single operation in a die casting tool (50), said die casting tool having at least one side shifting slide (46) for forming a portion of the inner surface (62) of said second bridge (56) and a lower portion of each said loop portion (38) (68) of the pull members (14) (64), each said at least one side shifting slide (46) being configured to shift orthogonally with respect to its insertion path.

8. The method of claim 1 wherein said slide (12) includes an upper guide (72) and a lower guide (74) for guiding a zipper chain through said slide (12), said upper guide (72) and said lower guide (74) being separated and secured together with a splitter (34), said splitter and said guides (72) (74) constructed and arranged to interlock said zipper chain when moved in a first direction and disengage said zipper chain when moved in a second direction.

9. The method of claim 1 wherein said slide (12) includes an upper guide (72), a middle guide (76) and a lower guide (74) for guiding a zipper chain and a second zipper chain through said slide (12), said upper guide (72) and said middle guide (76) being separated and secured together with a splitter (34), said middle guide (76) and said lower guide (74) being separated and secured together with a second splitter (35), said splitters (34) (35) and said guides (72) (76) (74) constructed and arranged to interlock said zipper chain and said second zipper chain when moved in a first direction and disengage said zipper chain and said second zipper chain when moved in a second direction.

10. The method of claim 1 wherein at least one of said pull member (14) and said slide member (12) includes indicia (78) formed integrally thereon, said indicia formed during said die casting process.

11. The method of claim 1 wherein said slide member (12) includes indicia (78) formed integrally thereon, said indicia formed during said die casting process.

12. The method of claim 1 wherein said slide assembly (10) is die cast from a metal.

13. The method of claim 12 wherein said metal is selected from the group consisting of zinc, aluminum, magnesium, titanium, copper, brass and combinations thereof.

## Patentansprüche

1. Verfahren zum Herstellen einer Schieberbaugruppe für einen Reißverschluss, wobei das Verfahren Folgendes umfasst:
Bilden eines Schieberelements (12), wobei das Schieberelement gefertigt und angeordnet ist, um eine Reißverschlusskette zu öffnen und zu schließen, wobei das Schieberelement (12) eine Oberfläche (24) beinhaltet, wobei die Oberfläche eine Brücke (16) mit einem ersten Ende (18) und einem zweiten Ende (20) beinhaltet, die beide einstückig mit der Oberfläche (24) gebildet sind, wobei eine Innenfläche (26) der Brücke gebildet ist, um im Wesentlichen flach zu sein, wenn sie sich quer über die Innenfläche (26) erstreckt und ein Zugelement (14) bildet, das einen Schlaufenabschnitt (38) und einen ersten Laschenabschnitt (40) aufweist, wobei der Schlaufenabschnitt als eine durchgehende Schlaufe um die Brücke (16) herum gebildet und einstückig mit dem ersten Laschenabschnitt (40) gebildet ist; wobei das Schieberelement (12) und das Zugelement (14) beide in einem einzelnen Vorgang in einem Druckgusswerkzeug (50) gebildet werden, wobei das Druckgusswerkzeug zumindest einen Seitenverschiebungsschieber (46) aufweist, um einen Abschnitt der Innenfläche (26) der Brücke (16) und einen unteren Abschnitt des Schlaufenabschnittes (38) des Zugelements (14) zu bilden, **dadurch gekennzeichnet, dass** der zumindest eine Seitenverschiebungsschieber (46) konfiguriert ist, um sich orthogonal in Bezug auf seinen Einführungsweg zu verschieben, wobei das Druckgusswerkzeug (50) ferner zumindest eine erste Einführung (48) und eine sekundäre Einführung (52) beinhaltet, wobei, wenn das Druckgusswerkzeug geschlossen ist, um den Schieber (12) und den Zug (14) zu bilden, der zumindest eine Seitenverschiebungsschieber (46) und die zumindest eine erste Einführung (48) und eine sekundäre Einführung (52) in den Bereich unter der Brücke (16) eingeführt werden, wobei die Einführung (48) und die Seitenverschiebungseinführung (46) zuerst entlang eines Einführungsweges positioniert sind, sodass die Seitenverschiebung stattfinden kann, nachdem der Schieber seine Einführungstiefe erreicht hat, als nächstes die sekundäre Einführung (52) zeitlich abgestimmt ist, um in dem Druckgusswerkzeug benachbart zu der Seitenverschiebungseinführung (46) positioniert zu sein, sobald die Seitenverschiebung stattgefunden hat.

2. Verfahren nach Anspruch 1, wobei das Druckgusswerkzeug (50) zwei Seitenverschiebungsschieber (46) beinhaltet, um einen Abschnitt der Innenfläche (26) der Brücke (16) und einen unteren Abschnitt des Schlaufenabschnittes (38) des Zugelements (14) zu bilden, wobei die zwei Seitenverschiebungsschlitten (46) konfiguriert sind, um sich orthogonal in Bezug auf ihre Einführungswege zu einer Position zu verschieben, die benachbart in Bezug zueinander ist.

3. Verfahren nach Anspruch 1, wobei der zumindest eine Seitenverschiebungsschieber (46) verschoben wird, sobald eine Einführungstiefe des zumindest einen Seitenverschiebungsschiebers (46) erzeugt worden ist, um das Werkzeug zu schließen, um einen Abschnitt des Schlaufenabschnittes (38) zu bilden.

4. Verfahren nach Anspruch 1, wobei der Schlaufenabschnitt (38) des Zugelements (14) im Wesentlichen rund ist.

5. Verfahren nach Anspruch 1, wobei der Schlaufenabschnitt (38) des Zugelements (14) im Wesentlichen quadratisch ist.

6. Verfahren nach Anspruch 1, wobei der Schlaufenabschnitt (38) des Zugelements (14) polygonförmig ist.

7. Verfahren nach Anspruch 1, wobei das Schieberelement (12) eine Bodenfläche (25) beinhaltet, wobei die Bodenfläche eine zweite Brücke (56) beinhaltet, wobei die zweite Brücke (56) ein erstes Ende (58) und ein zweites Ende (60) aufweist, die beide einstückig mit der Bodenfläche (25) gebildet sind, wobei eine Innenfläche (62) der Brücke gebildet ist, um im Wesentlichen flach zu sein, wenn sie sich quer über die Innenfläche (62) erstreckt;
ein zweites Zugelement (64) mit einem zweiten Schlaufenabschnitt (68) und einem zweiten Laschenabschnitt (70), wobei der zweite Schlaufenabschnitt (68) als durchgehende Schlaufe um die zweite Brücke (56) herum gebildet und einstückig mit dem zweiten Laschenabschnitt (70) gebildet ist;
wobei das Schieberelement (12) und die Zugelemente (14) (64) in einem einzelnen Vorgang in einem Druckgusswerkzeug (50) gebildet werden, wobei das Druckgusswerkzeug zumindest einen Seitenverschiebungsschieber (46) aufweist, um einen Abschnitt der Innenfläche (62) der zweiten Brücke (56) und einen unteren Abschnitt jedes Schlaufenabschnittes (38) (68) der Zugelemente (14) (64) zu bilden, wobei jeder zumindest eine Seitenverschiebungsschieber (46) konfiguriert ist, um sich orthogonal in Bezug auf seinen Einführungsweg zu verschieben.

8. Verfahren nach Anspruch 1, wobei der Schieber (12) eine obere Führung (72) und eine untere Führung (74) beinhaltet, um eine Reißverschlusskette durch den Schieber (12) zu führen, wobei die obere Führung (72) und die untere Führung (74) getrennt und mit einem Teiler (34) aneinander befestigt sind, wobei der Teiler und die Führungen (72) (74) gefertigt und angeordnet sind, um die Reißverschlusskette zu verriegeln, wenn sie in eine erste Richtung bewegt werden, und die Reißverschlusskette zu lösen, wenn sie in eine zweite Richtung bewegt werden.

9. Verfahren nach Anspruch 1, wobei der Schieber (12) eine obere Führung (72), eine mittlere Führung (76) und eine untere Führung (74) beinhaltet, um eine Reißverschlusskette und eine zweite Reißverschlusskette durch den Schieber (12) zu führen, wobei die obere Führung (72) und die mittlere Führung (76) getrennt und mit einem Teiler (34) aneinander befestigt werden, wobei die mittlere Führung (76) und die untere Führung (74) getrennt und mit einem zweiten Teiler (35) aneinander befestigt werden, wobei die Teiler (34) (35) und die Führungen (72) (76) (74) gefertigt und angeordnet sind, um die Reißverschlusskette und die zweite Reißverschlusskette zu verriegeln, wenn sie in eine erste Richtung bewegt werden, und die Reißverschlusskette und die zweite Reißverschlusskette zu lösen, wenn sie in eine zweite Richtung bewegt werden.

10. Verfahren nach Anspruch 1, wobei zumindest eines von dem Zugelement (14) und dem Schieberelement (12) Markierungen (78) beinhaltet, die einstückig daran gebildet sind, wobei die Markierungen während des Druckgussprozesses gebildet werden.

11. Verfahren nach Anspruch 1, wobei das Schieberelement (12) Markierungen (78) beinhaltet, die einstückig daran gebildet sind, wobei die Markierungen während des Druckgussprozesses gebildet werden.

12. Verfahren nach Anspruch 1, wobei die Schieberbaugruppe (10) aus einem Metall druckgegossen ist.

13. Verfahren nach Anspruch 12, wobei das Metall ausgewählt ist aus der Gruppe bestehend aus Zink, Aluminium, Magnesium, Titan, Kupfer, Messing und Kombinationen davon.

## Revendications

1. Procédé de fabrication d'un ensemble glissière destiné à une fermeture éclair, le procédé comprenant :
la formation d'un élément glissière (12), ledit élément glissière étant construit et agencé de manière à ouvrir et fermer une chaîne de fermeture éclair, ledit élément glissière (12) comprenant une surface supérieure (24), ladite surface supérieure comprenant un pont (16) comportant une première extrémité (18) et une seconde extrémité (20) toutes deux formées d'un seul tenant avec ladite surface supérieure (24), une surface interne (26) dudit pont formée pour être sensiblement plate lorsqu'elle s'étend transversalement à travers ladite surface interne (26) et formant un élément tirette (14) comportant une partie boucle (38) et une première partie languette (40), ladite partie boucle étant formée sous la forme d'une boucle continue autour dudit pont (16) et formée d'un seul tenant avec ladite première partie languette (40) ; ledit élément glissière (12) et ledit élément tirette (14) étant tous deux formés en une seule opération dans un outil de coulée sous pression (50), ledit outil de coulée sous pression comportant au moins une glissière à décalage latéral (46) pour former une partie de la surface interne (26) du pont (16) et une partie inférieure de la partie boucle (38) de l'élément tirette (14), **caractérisé en ce que** ladite au moins une glissière à décalage latéral (46) est conçu pour se décaler orthogonalement par rapport à son chemin d'insertion, ledit outil de coulée sous pression (50) comprenant en outre au moins un premier insert (48) et un insert secondaire (52), alors que ledit outil de coulée sous pression est fermé pour former la glissière (12) et la tirette (14), ladite au moins une glissière à décalage latéral (46) et ledit au moins un premier insert (48) et un insert secondaire (52) étant insérés dans la zone sous le pont (16), ledit insert (48) et ledit insert à décalage latéral (46) étant positionnés d'abord le long d'un chemin d'insertion de sorte que le décalage latéral puisse se produire après que la glissière ait atteint sa profondeur d'insertion, ensuite ledit insert secondaire (52) étant synchronisé de manière à être positionné dans l'outil de coulée sous pression adjacent à l'insert à décalage latéral (46) une fois le décalage latéral effectué.

2. Procédé selon la revendication 1, ledit outil de coulée sous pression (50) comprenant deux glissières à décalage latéral (46) destinées à former une partie de la surface interne (26) du pont (16) et une partie inférieure de la partie boucle (38) de l'élément tirette (14), lesdites deux glissières à décalage latéral (46) étant conçues pour se décaler orthogonalement par rapport à leurs chemins d'insertion vers une position adjacente l'une par rapport à l'autre.

3. Procédé selon la revendication 1, ladite au moins une glissière à décalage latéral (46) étant décalée une fois que la profondeur d'insertion de ladite au moins une glissière à décalage latéral (46) a été établie de manière à fermer l'outil pour former une partie de ladite partie boucle (38).

4. Procédé selon la revendication 1, ladite partie boucle (38) dudit élément tirette (14) étant sensiblement ronde.

5. Procédé selon la revendication 1, ladite partie boucle (38) dudit élément tirette (14) étant sensiblement carrée.

6. Procédé selon la revendication 1, ladite partie boucle (38) de ledit élément tirette (14) étant de forme polygonale.

7. Procédé selon la revendication 1, ledit élément glissière (12) comprenant une surface inférieure (25), ladite surface inférieure comprenant un second pont (56), ledit second pont (56) comportant une première extrémité (58) et une seconde extrémité (60) toutes deux formées d'un seul tenant avec ladite surface inférieure (25), une surface interne (62) dudit pont étant formée de manière à être sensiblement plate lorsqu'il s'étend transversalement à travers ladite surface interne (62) ;
un second élément tirette (64) comportant une seconde partie boucle (68) et une seconde partie languette (70), ladite seconde partie boucle (68) étant formée sous la forme d'une boucle continue autour dudit second pont (56) et formée d'un seul tenant avec ladite seconde partie languette (70) ;
ledit élément glissière (12) et lesdits éléments tirettes (14) (64) étant formés en une seule opération dans un outil de coulée sous pression (50), ledit outil de coulée sous pression comportant au moins une glissière à décalage latéral (46) pour former une partie de la surface interne (62) dudit second pont (56) et une partie inférieure de chacune desdites parties boucles (38) (68) des éléments tirettes (14) (64), chacune desdites au moins une glissière à décalage latéral (46) étant conçue pour se décaler orthogonalement par rapport à son chemin d'insertion.

8. Procédé selon la revendication 1, ladite glissière (12) comprenant un guide supérieur (72) et un guide inférieur (74) destinés à guider une chaîne de fermeture éclair à travers ladite glissière (12), ledit guide supérieur (72) et ledit guide inférieur (74) étant séparés et fixés ensemble avec un séparateur (34), ledit séparateur et lesdits guides (72) (74) étant construits et agencés de manière à verrouiller ladite chaîne de fermeture éclair lorsqu'ils sont déplacés dans une première direction et désengager ladite chaîne de fermeture éclair lorsqu'ils sont déplacés dans une seconde direction.

9. Procédé selon la revendication 1, ladite glissière (12) comprenant un guide supérieur (72), un guide médian (76) et un guide inférieur (74) destinés à guider une chaîne de fermeture éclair et une seconde chaîne de fermeture éclair à travers ladite glissière (12), ledit guide supérieur (72) et ledit guide médian (76) étant séparés et fixés ensemble avec un séparateur (34), ledit guide médian (76) et ledit guide inférieur (74) étant séparés et fixés ensemble avec un second séparateur (35), lesdits séparateurs (34) (35) et lesdits guides (72) (76) (74) étant construits et agencés de manière à verrouiller ladite chaîne de fermeture éclair et ladite seconde chaîne de fermeture éclair lorsqu'ils sont déplacés dans une première direction et désengager ladite chaîne de fermeture éclair et ladite seconde chaîne de fermeture éclair lorsqu'ils sont déplacés dans une seconde direction.

10. Procédé selon la revendication 1, au moins un élément parmi ledit élément tirette (14) et ledit élément glissière (12) comprenant des repères (78) formés d'un seul tenant sur celui-ci, lesdits repères étant formés pendant ledit processus de coulée sous pression.

11. Procédé selon la revendication 1, ledit élément glissière (12) comprenant des repères (78) formés d'un seul tenant sur celui-ci, lesdits repères étant formés pendant ledit processus de coulée sous pression.

12. Procédé selon la revendication 1, ledit ensemble glissière (10) étant coulé sous pression à partir d'un métal.

13. Procédé selon la revendication 12, ledit métal étant choisi dans le groupe constitué par le zinc, l'aluminium, le magnésium, le titane, le cuivre, le laiton et leurs combinaisons.
